# EUROPEAN PATENT APPLICATION

(11) **EP 4 782 096 A1**
(43) Date of publication of application: **29.07.2026**
(21) Application number: 26154262.5
(22) Date of filing: 27.01.2026
(51) Int. Cl.: B01F 23/60, B01F 23/70, B01J 2/20, B01J 2/22, B01J 2/28, B09B 3/21, B09B 3/24, B09B 3/32, B09B 3/38, B09B 3/40, B22F 1/103, B22F 1/12, B22F 1/142, B22F 1/148, B22F 3/00, B22F 3/20, B22F 8/00, B29B 7/34, B29B 9/08, B29B 9/10, B29B 11/10, B01F 101/45, B09B 101/75, B22C 1/26, B22F 3/14, B28B 3/20, B28B 7/00, B28B 13/02, B28B 13/06, B29C 43/32

(54) **PROCESS AND PLANT FOR THE PRODUCTION OF METAL PRODUCTS CONTAINING FERROUS AND/OR NOT FERROUS PARTICLES, FROM LIQUID AND/OR SOLID PROCESSING WASTE CONTAINING FERROUS AND/OR NOT FERROUS METAL PARTICLES, AND USE OF SAID METAL PRODUCTS AS RAW MATERIAL IN STEEL PRODUCTION**

(30) Priority: 27.01.2025 IT 202500001374
(71) Applicant: Alphatech S.r.l., 25050 Rodengo Saiano (BS) (IT)
(72) Inventor: BERTOLI, Mario, 25050 Rodengo Saiano (BS) (IT); MATTEOTTI, Nicola, 25050 Rodengo Saiano (BS) (IT); PEDERCINI, Franco, 25032 Chiari (BS) (IT)
(74) Representative: Botti & Ferrari S.p.A.

(57) **Abstract**

A process and a plant for the production of metal-containing products, in particular ferrous products from at least one liquid and/or solid processing waste containing metal particles, in particular ferrous particles such as steel rolling scales and/or sludge, are described, wherein the at least one processing waste, an organic binder and, optionally, a carbon-based reducing agent are loaded into a mixer and mixed to form an homogeneous blend, and said blend is poured into molds having a predetermined shape and compressed into the respective molds, thereby obtaining said ferrous products, which are extracted from the respective molds. The products obtained from the above-mentioned process, in particular the ferrous products, are suitable for being recycled in a process for the production of steel, in particular as raw material for feeding a melting furnace for steel production, such as an electric arc furnace (EAF), an induction furnace or a fuel furnace.

## Description

### Field of application

In its most general aspect, the present invention relates to the field of producing ferrous or non-ferrous metal alloys, such as steel, for example stainless steel.

In particular, the present invention relates to a process for producing ferrous and/or non-ferrous metal products from liquid or solid processing waste containing ferrous and/or not ferrous metal particles, in particular ferrous particles, such as steel rolling scales and/or sludge, an organic binder, and optionally a carbon-based reducing agent. These products have any predetermined shape, for example, they can be in the form of blocks, ingots, briquettes, or other similar shapes.

The present invention also relates to ferrous or not ferrous metal products, in particular ferrous products obtained by the above-mentioned process, for example in the form of blocks, and the use of ferrous products as ferrous raw material for steel production, in particular as raw material to be remelted in a furnace for steel production, such as preferably an electric arc furnace (EAF), induction furnace, or fuel furnace.

### Prior art

As is well known, ferrous alloys, such as steel in particular, are produced using a melting device such as an electric arc furnace (EAF), induction furnace, or fuel furnace.

The main steps of the steel production process include loading the furnace with a metal charge, usually consisting of ferrous scrap and any alloying elements such as carbon and chromium, melting the charge, for example by means of an electric arc, to obtain metal melt (cast iron) and slag, refining the melt by insufflating oxygen into the furnace, and tapping the molten cast iron and slag from the melting furnace. The slag, which consists mainly of silicates resulting from reactions of reduction of metal oxides with carbon or silicon present in the metal bath, can be solidified with water, ground, and reused for construction purposes. The molten cast iron tapped from the furnace is placed in a ladle and immediately processed in a converter, such as for example a VOD (Vacuum Oxygen Decarburization) or AOD (Argon Oxygen Decarburization) plant, to reduce its carbon content by oxidation with oxygen to produce carbon dioxide and thus convert the cast iron into steel. The molten steel obtained in this way is fed into a subsequent continuous-casting plant and cast into semi-finished steel products (blooms, slabs, and/or billets) which are transported to the rolling mill.

In the rolling mill, these semi-finished products are plastically deformed by hot and/or cold rolling after being heated to a temperature of 1100-1250°C in the case of hot rolling, with the aid of a succession of pairs of rotating cylinders (roll train) having a flat or progressively shaped surface depending on the specific shapes and sizes of the products to be obtained.

The steel products obtained at the end of the rolling process are then cooled with water in special tanks in order to fix the desired microstructure.

As is well known, during the hot and/or cold rolling process, the outer surface of the semi-finished steel product oxidizes due to high temperature and/or exposure to oxygen, generating solid processing waste consisting essentially of ferrous particles containing iron oxides with various proportions of FeO (ferrous oxide), Fe3O4 (magnetite), and Fe2O3 (hematite).

Said processing waste containing ferrous particles is removed from the surface of the rolled steel product, generally during the cooling step, resulting in rolling scales in the case of hot rolling or sludge consisting essentially of emulsions of ferrous particles in water and oils, commonly referred to as rolling sludge, in the case of cold rolling.

Rolling scales and sludge resulting from steel production are processing waste classified as special waste, which, to date, is difficult to dispose of and/or involves high disposal costs. Similar considerations apply to processing waste containing ferrous or non-ferrous metal particles from other processes, such as mechanical processes such as abrasion, sandblasting, milling, and similar processes.

Furthermore, the latest national and international regulations are placing increasing emphasis on environmental protection by promoting the recycling of industrial processing waste in accordance with the circular-economy model, rather than its disposal in landfills, which is subject to ever-increasing restrictions and could be completely banned in the coming years.

However, the reuse of rolling scales and sludge, as well as other processing waste containing metal particles, in industrial processes is problematic and/or expensive due to the high costs of the processes and related plants required to treat this processing waste so that it can be reintroduced (recycled) into an industrial process, such as a steel production process in particular.

US 2010/218420 describes a method for producing a briquette of a composite containing steel mill dust, the composite comprising oil, a carbonaceous material, and, optionally, a binder, wherein the aforementioned components of the composite are mixed to form a powdered mixture in a briquetting machine and such mixture is extruded between grooved rollers where it is compacted between pockets formed on the surface of such rollers to form briquettes of a predefined shape.

CN 1187156 describes a process for recovering steel mill waste materials, such as steel rolling waste, which involves mixing ferrous waste material with a carbon source, a polymeric resin of acrylonitrile or styrene dissolved in a hygroscopic solvent, calcium carbonate, an aluminosilicate binder, and an emulsion of an ethylene homopolymer in water to form a mixture that is extruded and compressed into molds to form briquettes.

CN101715473 describes a process for preparing a ferrous product in which a mixture of iron oxide flakes and a polyolefin-based binder (e.g., propylene) is extruded and compacted to form the product in the form of briquettes.

WO 03/012152 describes a process for producing a ferrous product in which a mixture containing an iron ore and an additive referred to as "flux" (particularly limestone) is extruded and compressed to form "green" briquettes. The "green" briquettes are then hardened by firing to form fired briquettes.

The main object of the present invention is therefore to provide a process and a plant for treating liquid and/or solid processing waste containing ferrous and/or non-ferrous metal particles, in particular liquid and/or solid processing waste containing ferrous particles, such as steel rolling slag and sludge, which converts such processing waste into products that are easily reusable or recyclable in industrial processes, particularly in steel production processes, so as to overcome the above-mentioned drawbacks of the prior art.

Another object of the present invention is to provide a process and a plant as above that is efficient and has low design and operating costs.

### Summary of the invention

The Applicant found a new process for the treatment of liquid and/or solid processing waste containing ferrous and/or non-ferrous metal particles, in particular liquid or solid processing waste containing ferrous particles, such as steel rolling scales and sludge, through which process said rolling waste is hot mixed with an organic binder and, optionally, a carbon-based reducing agent, thereby obtaining a blend (also referred to as compound) which is compressed to form metal products, in particular ferrous products, with a desired specific weight and in the desired shape, for example in the form of blocks, ingots, or other similar shapes. Said products can be advantageously recycled in an industrial process. In particular, ferrous products obtained by the process of the invention can be recycled in the steel production process, thereby being very useful as raw material to be remelted in a furnace for steel production, such as preferably an electric arc furnace (EAF), an induction furnace, or a fuel furnace, as a partial or total replacement of the metal scrap for feeding said furnace. Moreover, such products allow to obtain considerable advantages in terms of productivity and/or inexpensiveness of the process of steel production, as will be better highlighted below in the present description.

Based on the above, the above-mentioned objects are achieved according to the present invention by a process for producing metal products containing ferrous and/or non-ferrous particles from liquid or solid processing waste containing ferrous and/or non-ferrous metal particles, the process comprising the steps of:
- loading at least one liquid and/or solid processing waste containing said ferrous and/or non-ferrous metal particles, an organic binder, and, optionally, a carbon-based reducing agent into a mixer,
- hot mixing said components to obtain a mixture (compound) containing said metal particles and, optionally, said reducing agent, bound by said organic binder,
- pouring said mixture into molds having a predetermined shape,
- compressing the mixture poured into the respective molds at a pressure between 10 MPa (100 bar) and 60 MPa (600 bar), to obtain said metal products, each in a respective mold, each having a specific weight of at least 3000 kg/m³,
- removing said metal products from the respective molds.

In one embodiment, the aforementioned process comprises the steps of:
- optionally premixing said at least one liquid and/or solid processing waste containing said metal particles,
- preheating said at least one processing waste, possibly premixed, to a temperature between 180°C and 300°C, preferably between 200°C and 230°C,
- charging said at least one preheated processing waste, an organic binder, and, optionally, a carbon-based reducing agent into a mixer,
- hot mixing said components in said mixer to obtain a mixture (compound) containing said metal particles and, optionally, said reducing agent, bound by said organic binder,
- pouring said mixture into molds having a predetermined shape,
- compressing the mixture poured into the respective molds at a pressure between 10 MPa (100 bar) and 60 MPa (600 bar), to obtain metallic products, each in a respective mold, each having a specific weight of at least 3000 kg/m³,
- extracting said metal products from the respective molds.

In one embodiment, said preheating step of said at least one processing waste is performed in such a way as to reduce the moisture content of said at least one processing waste to a value less than 1%.

In one embodiment, said mixing step is performed at the preheating temperature of said at least one processing waste.

In a preferred embodiment, said metal products are ferrous products and said at least one liquid and/or solid processing waste containing metal particles is at least one liquid and/or solid processing waste containing ferrous particles.

The above-mentioned objects are also achieved by a metal product containing ferrous and/or non-ferrous metal particles, in particular a metallic product containing ferrous particles and, optionally, carbon particles bound by an organic binder, wherein said metal product is obtainable by a process as described above. Said metallic product can have any predetermined shape, for example it can be in the form of a block, and is characterized by having a specific weight of at least 3000 kg/m³, in particular a specific weight between 3000 kg/m³ and 4500 kg/m³, for example a specific weight between 3000 kg/m³ and 4000 kg/m³.

The aforementioned purposes are also achieved by a plant for the production of metal products containing ferrous and/or non-ferrous particles from liquid or solid processing waste containing ferrous and/or non-ferrous metal particles, the plant comprising:
- a preheating unit,
- a mixer,
- a forming press comprising a plurality of compression units, each having a mold and a piston operatively connected to each other, a cooling device operatively connected to said molds, and means for feeding a mixture exiting from said mixer into said molds of the compression units,
- means for feeding said processing waste into said preheating unit,
- means for feeding dried processing waste exiting from said preheating unit into said mixer, and
- means for feeding an organic binder and a carbon-based reducing agent into said mixer.

Preferably, the forming press is configured to perform, in each compression unit, operating cycles of loading said mixture into a respective mold, compressing the mixture in said mold through a respective piston to form a metal product, cooling said mold containing said metal product through said cooling device, and ejecting said metal product from said mold.

Preferably, the operating cycles of the compression units of the press are performed in a staggered manner, i.e. at staggered intervals.

The present invention also relates to the use of a metallic product containing ferrous particles as described above in a process for the production of steel, in particular to the use of said ferrous product as raw material for feeding a melting furnace for steel production, such as preferably an electric arc furnace (EAF), an induction furnace or a fuel furnace.

Further features and advantages of the present invention will become clearer from the following detailed description, which is provided by way of non-limiting example, with reference to the attached figures.

### Brief description of the figures

Figure 1 shows a general diagram of a plant for treating solid and/or liquid processing waste containing ferrous particles, such as steel rolling scales and/or sludge, according to an embodiment of the process of the present invention.
Figure 2 shows schematically a section of the plant of Figure 1.
Figure 3 shows the results of experimental tests relating to the behavior of briquettes produced with the process of the invention at the metal-slag interface and relating to foaming.

### Detailed description

In the present description, the term "ferrous" must be understood in a general sense as a material containing iron, which may be in the non-oxidized form (metallic iron) and/or in the oxidized form (one or more iron oxides). Therefore, in the present description, the term "ferrous particles" means particles in any form that contain iron and/or one or more iron oxides.

As a consequence, the term "non-ferrous" means a material that does not contain iron in any form and "non-ferrous particles" means particles of any form that do not contain iron.

The term "processing waste containing metal particles" means any by-product of a mechanical processing that contains ferrous particles (metallic iron and/or one or more iron oxides) and/or non-ferrous particles in any form, such as powders, scales, flakes, granules, etc. Depending on the type of processing, said by-product may be in solid form containing or consisting of ferrous and/or non-ferrous particles, substantially anhydrous or wet, or it may be a substantially liquid by-product in which the ferrous and/or non-ferrous particles are contained in a liquid medium, such as water and/or other solvents and/or oils, for example in the form of a dispersion or emulsion, such as for example in rolling sludge.

Although the process of the invention is described herein with reference to the production of ferrous products from processing waste containing ferrous particles, it should be noted that the process of the invention herein described can be used in the same way for the treatment of regeneration of any solid and/or liquid processing waste containing ferrous and/or non-ferrous metal particles that constitutes a mechanical-processing waste of an industrial process.

By way of a non-limiting example, the processing waste treated by the process according to the invention comprise steel rolling scales and/or sludge, drawing sludge, ferrous and/or non-ferrous powders generated through a mechanical process, such as for example abrasion, sandblasting, milling, and similar processes.

In a preferred embodiment, the processing waste treated with the process according to the invention comprise or consist of steel rolling scales and/or sludge.

In the process according to the invention, the organic binder may be any organic compound or product or a combination of organic compounds or products, of natural or synthetic origin (virgin or recycled) and having a high molecular weight, that is capable of keep together the metal particles, in particular the ferrous particles, contained in the at least one treated processing waste, so as to form a substantially homogeneous mixture under the selected operating conditions of the hot mixing ( in a mixer or in an extruder) and that also is a carbon source having a reducing action when it is thermally degraded.

Preferably, the organic binder consists of at least one polymer material, preferably a thermoplastic polymer material and/or at least one wax.

Suitable thermoplastic polymer materials include polyolefin-based materials such as preferably polyethylene (PE), polypropylene (PP), polyethylene terephthalate (PET), high-density polyethylene (HDPE), low-density polyethylene (LDPE), and combinations thereof. In addition to said thermoplastic polymers, the polymer material may also comprise one or more elastomers, such as for example styrene-butadiene rubber (SBR) and natural rubber (NR). The term "polyolefin-based" means that the polyolefin content in the polymer material is at least 50%, namely between 50% and 100%.

The polymer materials may be virgin and/or preferably derive from waste or recycled plastic materials, such as waste plastic materials of industrial and/or domestic waste. Said waste plastic materials may for example comprise waste or recycle of domestic-use material, industrial waste, packaging, disposable plastic objects, plastic waste in general. Moreover, before the use according to the invention, the above-mentioned recycle plastic materials may be subjected to pre-treatments known in the art, in particular to reduce chlorine content to a value lower than 2% referred to the dry sample after 4 hours of drying at 105°C, in accordance with UNI EN 15408 standard.

Suitable waxes include natural or synthetic products having a melting temperature preferably between 140°C and 200°C.

The carbon-based reducing agent may be any organic, natural or synthetic, compound or product or a composition of organic compounds or products of natural or synthetic origin that mainly or substantially contains carbon particles. Preferably, the reducing agent is of natural origin and it is selected from coal, biochar, hydrochar, and combinations thereof.

The term "biochar" means a carbonaceous material obtained by thermal degradation (pyrolisis) of biomass of both animal and vegetable origin, whereas the term "hydrochar" means a carbonaceous material obtained by thermochemical treatment of biomasses through Hydrothermal Carbonization.

In the process according to the invention, the at least one solid and/or liquid processing waste can have a moisture content generally lower than 35%, particularly lower than 7% in the case of solid processing waste (e.g., rolling scales), or lower than 12% in the case of liquid processing waste (e.g., rolling sludges).

In a preferred embodiment of the process according to the invention, the at least one solid and/or liquid processing waste is optionally cold-premixed in a suitable mixer to achieve initial homogenization and is subsequently preheated to a temperature between 180°C and 300°C, preferably between 200°C and 230°C, thus obtaining a raw material (process waste) with a moisture content preferably lower than 1% by weight of the at least one preheated processing waste. In this way, much of the moisture contained in the processing waste is eliminated, improving the bonding of the organic binder with the metal particles and the reducing agent, if present, in the subsequent hot mixing step and also promoting the formation of particularly compact metal products at the end of the compression step.

The preheating of the at least one processing waste can be carried out in conventional equipment, such as a rotary drum dryer.

In the process according to the invention, the preheated processing waste is mixed under heat with an organic binder and, optionally, a carbon-based reducing agent in a mixer to obtain a substantially homogeneous mixture (compound). Mixing within the mixer can be carried out at a temperature between 180°C and 300°C, preferably between 200°C and 230°C. Preferably, mixing within the mixer is carried out at a temperature equal to the preheating temperature.

In the process according to the invention, the at least one solid and/or liquid processing waste preheated to reduce the moisture content may be loaded into the mixer in an amount such as to have a ferrous particle content in the mixture in an amount such as to have a ferrous and/or non-ferrous particles content in the mixer comprising between 60% and 90%, preferably 70% to 85%, by weight on the total weight of said particles, organic binder and carbon-based reducing agent, if there is any.

The carbon-based reducing agent may be loaded into the mixer in an amount of 5% to 20%, preferably 10% to 15%, by weight on the total weight of said particles, organic binder and carbon-based reducing agent.

The organic binder may be loaded into the mixer in an amount of 5% to 30%, preferably 5% to 15%, or 20% to 30%, by weight on the total weight of said particles, organic binder and carbon-based reducing agent. For example, when the carbon-based reducing agent is added, the amount of organic binder added to the mixer may be in the range of 5-15%. On the contrary, when the carbon-based agent is absent, the amount of organic binder added to the mixer is higher, for example in the range of 20-30%, so as to generate a suitable amount of reducing carbon in the operating conditions of use of the metallic product, in particular a product containing ferrous particles, obtained with the process of the invention, for example in a melting furnace for the production of steel, generating carbon by thermochemical decomposition in the absence of oxygen (pyrolisis).

In general, the weight ratio between the amount of organic binder or of carbon-based reducing agent and the amount of particles contained in the at least one processing waste, may range between 1:20 and 1:2.

In a preferred embodiment, at least one liquid and/or solid processing waste containing ferrous particles, an organic binder and a carbon-based reducing agent are loaded into the mixer. Preferably, the amount of organic binder, such as a wax or a polymer, loaded into the mixer is between 5 and 15%, and the amount of carbon-based reducing agent is in the range between 10% and 15%, wherein the percentages are by weight on the total weight of the ferrous particles, the organic binder and the carbon-based reducing agent.

In another embodiment, at least one liquid and/or solid processing waste containing ferrous particles and an organic binder are loaded into the mixer, without addition of a carbon-based reducing agent. Preferably, the amount of organic binder, such as a wax or a polymer, loaded into the mixer is between 20 and 25%, wherein the percentages are by weight on the total weight of the ferrous particles, the organic binder and the carbon-based reducing agent.

In the process according to the invention, the mixture exiting from the mixer is poured into metallic containers (molds) which have a predetermined shape and whose inner surface is preferably coated at least partially with a film made of a detaching agent, for example a silicone. Advantageously, these molds can be integrated with a compression device, such as a hydraulic press, to perform the subsequent compression step of the mixture. Preferably, the mixture is poured in predetermined portions into the respective molds until they are substantially filled.

In the process according to the invention, the compression (pressing) step of the mixture poured in the respective molds is carried out by applying a pressure preferably of 10 MPa (100 bar) to 60 MPa (600 bar), for example 40 MPa (400 bar), to each mixture in the respective mold, based on the mixture composition and in order to obtain a resulting metallic product with a predetermined specific weight.

More in detail, in the compression step of the process according to the invention, a pressure is applied to the mixture in the respective molds, the pressure being such to obtain a metallic product with a specific weight of at least 3000 kg/m³, in particular a specific weight of 3000 kg/m³ to 4500 kg/m³, for example a specific weight of 3000 kg/m³ to 4000 kg/m³.

As will be better shown later, a metallic product, in particular a ferrous product having a specific weight as above is particularly useful for the use as a melting raw material in a furnace for the production of steel, in particular an electric arc furnace, and it is capable of penetrating the surface layer of black slag that forms inside the furnace and protects the metal melt by advantageously positioning at the slag-metal melt interface. A metal product of this type can also be recycled for other uses, for example for recycling in induction furnaces for the production of cast iron.

At the end of compression, the molds containing the metal products, in particular the ferrous products, may be cooled, for example to a temperature preferably not lower than 50°C or alternatively up to room temperature, and the metal products, in particular the ferrous products, are extracted and recovered from the respective molds in a per se conventional way.

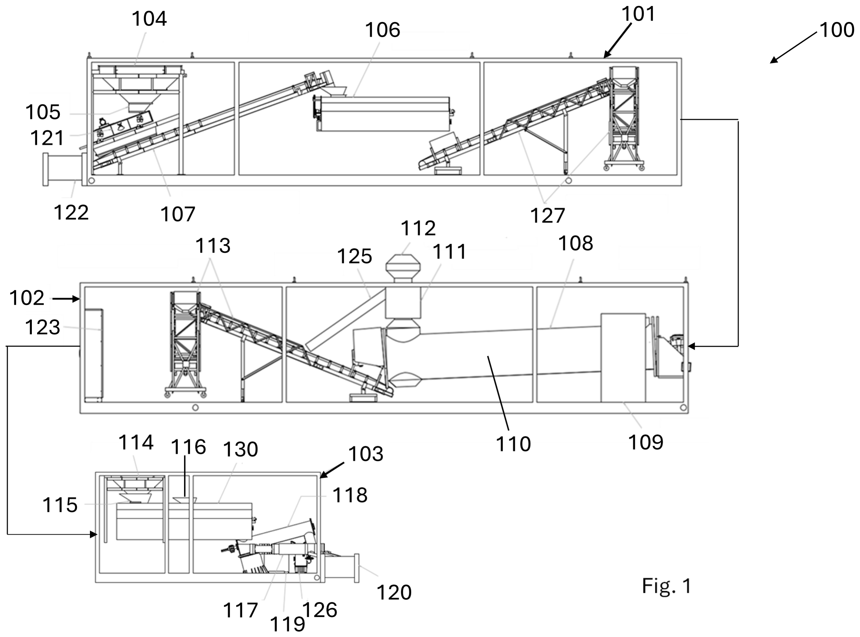

Figure 1 schematically shows a plant for the treatment of dry and/or wet ferrous metal powders, such as steel rolling scales and/or sludges, according to the process of the present invention. This plant is designated as a whole by the reference number 100 and comprises three sections (modules), designated as a whole by the reference numbers 101, 102, and 103.

The first section 101 of the plant 100 comprises loading hoppers 104 and dosing units 105, such as volumetric dosing units, for respective liquid and/or solid processing waste (e.g., steel rolling scale and/or sludge) in fluid communication with each other and in fluid communication below with an inlet opening of a mixer 106 for said processing waste. The first section 101 also comprises a screening device 121, a first conveyor belt 107 for loading the dosed processing waste through the dosing units 105 into the mixer 106, and two second conveyor belts 127 arranged in succession for loading the mixed (homogenized) processing waste coming from the outlet opening of the mixer 106 into a rotating drum dryer 108.

The second section 102 comprises the aforementioned rotary drum dryer 108, which has a preheating/drying chamber 110 in upstream fluid communication with a combustion chamber 109 with a gas burner (e.g., methane) and in downstream fluid communication with a dust recovery filter 111 which is in turn in fluid communication with a chimney 112 arranged above said filter 111. The second section also comprises third conveyor belts 113 arranged in succession for loading the preheated/dried processing waste from an outlet opening of the dryer 108 into the hot mixer 130, and a control unit 123.

The third section 103 comprises the aforementioned hot mixer 130, loading hoppers 114, and dosing units 115, such as volumetric dosing units 115 for the binder and the carbon-based reducing agent respectively, in fluid communication with a respective inlet opening in a mixing chamber of the mixer 130, and a loading hopper 116 for the preheated/dried processing waste in fluid communication with a respective inlet opening in said mixing chamber of the mixer 130. The third section 103 further comprises a hydraulic forming press 117 controlled by a unit (control unit) 126, the forming press 117 comprising a plurality of compression units each comprising a mould 131 (or compression chambers) and a piston 132 in operative communication with each other, a rotating screw 118 in fluid communication with an outlet opening of the hot mixer 130 and in operative communication with the moulds 131 of the compression units of the press 117, a cooling device 119 for the moulds 131 of the press 117, and a container 120 for collecting the finished compressed product (block) ejected from the molds 131 of the press 117.

In particular, the rotating screw 118 can be moved sequentially toward the molds 131 of the compression units to pour predetermined quantities of the mixture exiting from the mixer 130 into said molds 131. The forming press 117 performs, in each of the compression units, automatic cycles of filling the mixture into the respective mold 131 opened by the screw 118, compressing the mixture in the mold 131 by the respective piston 132, cooling the mold 131 to obtain a finished product (e.g., a block), and ejecting this finished product from an unloading area of the mold 131.

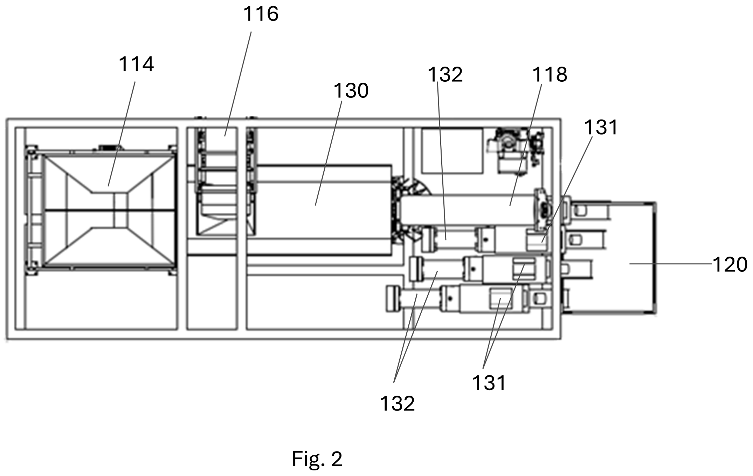

Advantageously, the operating cycles of the compression units of the press 117 can be performed at staggered intervals. For example, in the plant 100 shown in Figures 1 and 2, the press 117 has four compression units, and the operating cycles of these compression units can be implemented so that while one compression unit performs the loading sequence of the mixture portion into the respective mold 131, the other previously loaded compression units each perform a different subsequent operation, i.e., the second compression unit performs the compression step, the third compression unit performs the mold cooling step, and the fourth compression unit performs the product ejection step from the mold and is ready to begin a new processing cycle.

In this way, production times are advantageously reduced and the hourly production capacity of the plant is considerably increased.

Furthermore, the cooling step can be carried out until a temperature sufficient to allow the ejection from the mold, for example a temperature of approximately 50°C. In this way, saving of the plant's energy consumption is obtained as it is avoided a cooling up to room temperature.

With the plant 100 described above, processing wastes, such as rolling scales and/or sludges, are fed into the respective loading hoppers 104, suitable for receiving from Big Bags or equivalent systems, and are then automatically dosed by the respective volumetric dosing units 105, which regulate the flow rate into the mixer 106. The dosed processing wastes pass through the screening device 121, such as a vibrating screen, to separate coarse particles. The coarse particles separated by the vibrating screen 121 are discharged into a bin 122, while the processing wastes, once the coarse particles have been removed, are loaded onto the first conveyor belt 107 and transported from the belt 107 for the feeding into the cold mixer 106.

Inside the mixer 106, the processing wastes are cold-mixed, i.e., at room temperature, to achieve initial homogenization.

The mixed processing wastes exiting the mixer 106 is loaded onto the second conveyor belts 107 and transported by them to be fed into the dryer 108. In the dryer 108, the processing wastes are preheated in the preheating/drying chamber 110, preferably to an operating temperature between 200°C and 230°C, by means of hot gases produced by the combustion of a preheat gas (e.g., methane) coming from the combustion chamber 109, so as to reduce its moisture content.

The dried processing wastes exiting the dryer 108 are loaded onto the conveyor belts 113 and fed via the hopper 116 into the mixer 130. The combustion gases instead exit the preheating/drying chamber 110 via the chimney 112 after having passed through the filter 111 for retaining the dust transported by these gases. The powders recovered from the filter 111 pass through a screw conveyor 125 and are loaded onto conveyor belts 113 to be fed into the mixer 130.

Predetermined doses of the binder and carbon-based reducing agent are also loaded into the mixer 130 via the respective loading hoppers 114 and the respective volumetric dosing units 115.

In the mixer 130, the preheated processing wastes, the binder, and the reducing agent are mixed together under heat, preferably at an operating temperature between 200°C and 230°C, obtaining a mixture that is conveyed into a loading hopper of the forming press 117 via the rotating screw conveyor 118.

In particular, the aforementioned mixture is introduced in predetermined doses in sequence into the molds 131 of the compression units of the press 117 and for each dose of mixture inserted into a respective mold 131 of a compression unit, the press 117 performs an automatic cycle of filling, compression (pressing) so as to obtain a block (compound), cooling of the block by means of the cooling device 119 and expulsion of the cooled block from an unloading area of the respective compression chamber of the press 117 into the collection container 120.

The metal product obtained with the process according to the invention as described above may comprises both ferrous and/or non-ferrous metal particles and carbon particles bound by an organic binder.

Preferably, the metallic product according to the invention is a ferrous product comprising ferrous metal particles in an amount of 60% to 90%, preferably 70% to 85%, an organic binder in an amount of 5% to 30%, preferably 5% to 15% or 20% to 30%, and preferably, a carbon-based reducing agent in an amount of 5% to 20%, preferably 10% to 15%, wherein the percentages are by weight on the total weight of the ferrous product.

The metallic product according to the invention has a specific weight of at least 3000 kg/m³, in particular a specific weight of 3000 kg/m³ to 4500 kg/m³, for example a specific weight of 3000 kg/m³ to 4000 kg/m³.

Moreover, the ferrous product according to the invention has high mechanical-strength properties, as it is shown, for example, by drop tests after which the shape of said ferrous product is substantially unchanged without evident breaks and crumbling.

Thanks to its properties as indicated above, the ferrous product according to the invention can be advantageously recycled in the processes of production of steel, in particular as raw material to be remelted in a furnace for steel production, such as preferably an electric arc furnace (EAF), an induction furnace, or a fuel furnace, as a partial or total replacement of the ferrous scrap (for example, iron alloys) which traditionally constitutes the feeding charge of said furnaces.

In fact, at the high operation temperatures of the furnace, the ferrous product melts, the organic binder present therein decomposes and carbonizes and the carbon obtained from said decomposition together with the carbon coming from the particles of the reducing agent, if present, is released into the molten metal bath reducing the metal oxides that are in said bath (in particular, iron oxides) thereby allowing to suitably recover the metal elements (reduction of the metal-element losses) and to obtain a chemical balance of the bath, and to maintain a suitable carbon content in the final steel.

Moreover, by suitably adjusting the specific weight of the ferrous product according to the invention to a value of at least 3000 kg/m³, preferably in the range between 3000 kg/m³ and 4500 kg/m³, the ferrous product according to the invention is capable of penetrating the surface layer of black slag that forms inside the furnace and that protects the metal melt inside the furnace and can position itself in the interface between the slag and the melt, thereby promoting the formation of foamy slag thanks to the generation of volatile gases by the decomposition of the organic binder and by the oxidation-reduction reactions of carbon with the oxides that are in the slag. As is known, in the production of steel, the formation of foamy slag inside the melting furnace, such as an electric arc furnace, is particularly desired since it allows to thermally insulate and protect the bath of the melt and to reduce energy losses.

Therefore, the ferrous product according to the present invention also allows a significant improvement of the steel production process in terms of production efficiency and/or final-steel quality.

Moreover, it should be noted that the present invention allows the recovery of processing waste, such as ferrous and/or non-ferrous metal powders and rolling scales/sludge, which are difficult to reuse in a raw material reusable in an industrial process, to the advantage of an improvement of the balance of the economic and environmental sustainability and of circular economy.

In this regard, it should be also noted that the process according to the invention allows to reuse carbon sources such as biochar, hydrochar, and polymers of plastics that are not recyclable (or difficult to recycle), thereby contributing to the reduction of carbon-dioxide emissions and to a increased environmental sustainability. Thanks to said features, the present invention allows the production of green steel, thereby providing a sustainable alternative to the production of traditional steel.

Moreover, the ferrous product according to the invention is a good alternative of provision of the classic metal scrap for feeding the melting furnaces with competitive prices.

Finally, the process according to the invention requires relatively simple and widely available apparatuses and can be implemented with low design and operation costs.

Below, the present description provides some examples of assessment of the efficiency of ferrous products obtained with the process of the invention on the melting process in a furnace for the production of steel, said examples being provided by way of non-limiting illustration.

### EXAMPLE 1

*Behavior of briquettes produced with the method of the invention at the metal-slag interface and foaming.*

Briquettes of ferrous products containing steel rolling scales, a polymer binder consisting of a polyolefin-based recycle plastic material and optionally a carbon-based reducing agent consisting of coal (anthracite) were produced with the method according to the invention.

The composition of the above-mentioned briquettes is shown in the following Table 1.

**Table 1**

| Sample description | Composition |
|---|---|
| Briquette with polymer | 80% scales |
| | 20% polymer |
| Briquettes with polymer and anthracite | 75% scales |
| | 15% coal |
| | 10% polymer |

The briquettes had each a weight of 2.4 kg and a density (specific weight) of about 3500 kg/m³.

Experimental tests were carried out in a laboratory crucible to assess the behavior of the above briquettes at the metal-slag interface and the efficacy of foaming (formation of foamy slag). The tests followed the following protocol:

### a) Preparation of the material

Electrolytic iron (2.5 kg) as molten metal and a decarburized slag (0.5 kg) were used to simulate the conditions of the electric furnace in a 3 kg alumina crucible. The tested samples were obtained from the original cylindrical briquettes by cutting a briquette disk with a disk saw with a diameter equal to the diameter of the original briquettes of 5 cm and height of 1 cm, reduced to adapt to the test conditions.

### b) Experimental setup

The metal and the slag were loaded into the crucible and melted. Once complete melting was achieved, the sample was introduced into the system to observe its behavior. The addition was carried out by dropping through the external bucket system of the furnace.

### c) Observations during the test

After the introduction of the sample into the crucible, the formation of a thick black smoke and a swelling of the metal bath was observed, especially for the sample of briquette containing polymer and anthracite. This phenomenon is attributable to the immediate release of volatile gases generated by the thermal decomposition of the polymer binder and by the reaction of anthracite with the compounds present in the slag. The combination of these reactions causes an accelerated formation of bubbles inside the bath, said bubbles forming the evident swelling thereof.

### d) Post-melting results

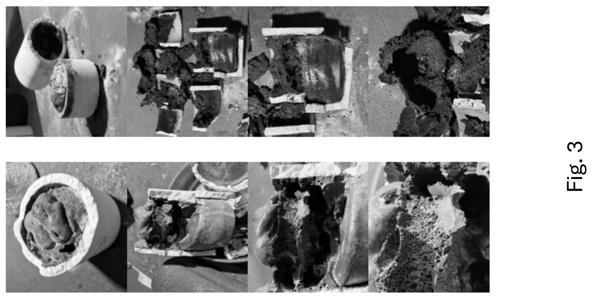

Figure 3 shows the final conditions of the crucible and of the metal-slag phases after the introduction of the briquettes at the end of the cooling step. In particular, the images on the left refer to the crucible after cooling in which the sample of briquette containing polymer and devoid of anthracite was introduced, whereas the images on the right refer to the crucible after cooling in which the sample of briquette containing polymer and anthracite was introduced.

In both tests, the briquette clearly positioned itself at the interface between the molten metal and the slag, thereby confirming to have a specific weight suitable for this behavior. Indeed, a clear separation between the metal phase and the slag phase can be observed in the remaining structure, thereby confirming the ability of the briquettes to stabilize the interface. Moreover, the slag is characterized by a porous structure, with evident microbubbles distributed inside. This suggests that gases were generated in a significant amount during the process, thereby promoting the foaming phenomenon. The slag phase is emptied in some areas, which indicates a good interaction between the produced gases and said slag.

Moreover, the images in Figure 3 also show that the briquettes containing polymer and anthracite promoted a higher gas production compared to those containing polymer and devoid of anthracite, as is demonstrated by the more evident foaming level in the slag phase. In any case, both types of briquettes confirmed the ability of correctly positioning themselves at the interface between molten metal and slag.

### EXAMPLE 2

### Carburation of the bath and metal yield.

Melting tests on briquettes having the composition shown in Table 1 of Example 1 were carried out by metal bath using a pilot plant (Balzers furnace) to assess both the metal yield of the briquettes and their ability to contribute to the carburation of the bath. At the end of each test, the crucible was left to cool, thereby allowing the extraction of a metal ingot. This ingot was subsequently subjected to chemical analyses to assess the levels of carbon (C) and sulphur (S), together with the nickel content. The latter was used as a tracer to monitor the actual incorporation and distribution of the materials introduced during the process, thereby providing an indirect indication about the yield of the original material. The following Table 2 shows the content of C and S for both metal ingots.

**Table 2**

| Element | Briquette containing polymer without anthracite | Briquette containing polymer and anthracite |
|---|---|---|
| | (%) | (%) |
| C | 0.0061 | 1.04 |
| S | 0.0049 | 0.042 |

Instead, the following Table 3 shows the results as regards the metal yield, given as the ratio between the metal fraction actually introduced by means of the briquette and the metal recovered (calculated using the nickel introduced as a tracer), and carbon only on the reduced metal (from calculations).

**Table 3**

| Sample | Metal yield | Carbon only on the reduced metal |
|---|---|---|
| | (%) | (%) |
| Briquette containing polymer without anthracite | 41 | 0.09 |
| Briquette containing polymer and anthracite | 97 | 5.33 |

The results obtained show that the briquette containing polymer and anthracite has a very high metal yield and carbon content in the reduced metal, thus highlighting a high efficacy of said briquette in the carburation of the bath and in the transfer and incorporation of the metal materials. Instead, the briquette containing polymer and devoid of anthracite has metal yield and carbon content in the reduced metal that are lower but still satisfactory.

## Claims

1. Process for the production of metal products containing ferrous and/or non-ferrous particles from liquid or solid processing waste containing ferrous and/or non-ferrous metal particles, the process comprising the steps of:
- loading at least one liquid and/or solid processing waste containing said ferrous and/or non-ferrous metal particles, an organic binder, and, optionally, a carbon-based reducing agent into a mixer (130),
- hot mixing said components to obtain a mixture containing said metal particles and, optionally, said reducing agent, bound by said organic binder,
- pouring said mixture into molds having a predetermined shape,
- compressing the mixture poured into the respective molds at a pressure between 10 MPa (100 bar) and 60 MPa (600 bar), to obtain said metal products, each in a respective mold, each having a specific weight of at least 3000 kg/m³,
- removing said metal products from the respective molds.

2. Process according to claim 1, comprising the steps of:
- optionally premixing said at least one liquid and/or solid processing waste containing said metal particles,
- preheating said at least one processing waste, possibly premixed, to a temperature between 180°C and 300°C, preferably between 200°C and 230°C,
- charging said at least one preheated processing waste, an organic binder, and, optionally, a carbon-based reducing agent into said mixer (130),
- hot mixing said components to obtain a mixture containing said metal particles and, optionally, said reducing agent, bound by said organic binder,
- pouring said mixture into molds having a predetermined shape,
- compressing the mixture poured into the respective molds at a pressure between 10 MPa (100 bar) and 60 MPa (600 bar), to obtain metallic products, each in a respective mold, each having a specific weight of at least 3000 kg/m³,
- extracting said metal products from the respective molds.

3. Process according to claim 1 or 2, wherein said preheating step of said at least one processing waste is performed in such a way as to reduce the moisture content of said at least one processing waste to a value less than 1% by weight on the weight of said at least one processing waste.

4. Process according to anyone of the preceding claims, wherein said mixing step is performed at the preheating temperature of said at least one processing waste.

5. Process according to anyone of the preceding claims, wherein said metal products are ferrous products and said at least one liquid and/or solid processing waste containing metal particles is at least one liquid and/or solid processing waste containing ferrous particles, preferably at least one liquid and/or solid processing waste comprising or consisting of steel rolling scales and/or sludges.

6. Process according to anyone of the preceding claims, wherein said at least one solid and/or liquid processing waste is loaded into said mixture in an amount such as to have a ferrous and/or non-ferrous particles content in the mixer of 60% to 90%, preferably 70% to 85%, said carbon-based reducing agent, if present, is loaded into the mixer in an amount of 5% to 20%, preferably 10% to 15%, and said organic binder is loaded into the mixer in an amount of 5% to 30%, preferably 5% to 15% or 20% to 30%, wherein the percentages are by weight on the total weight of said particles, the organic binder and the carbon-based reducing agent.

7. Process according to anyone of the preceding claims, wherein at least one processing waste containing ferrous particles, an organic binder and a carbon-based reducing agent are loaded into the mixer.

8. Process according to any one of the preceding claims, wherein said organic binder selected from at least one virgin and/or waste and/or recycled thermoplastic polymer material, at least one wax and combinations thereof, wherein said at least one thermoplastic polymer material is preferably polyolefin-based.

9. Process according to any one of the preceding claims, wherein said carbon-based reducing agent is selected from coal, biochar, hydrochar and combinations thereof.

10. Metal product containing ferrous and/or non-ferrous metal particles and, optionally, carbon particles bound by an organic binder, **characterized in that** said metal product has a specific weight of at least 3000 kg/m³, preferably a specific weight of 3000 kg/m³ to 4500 kg/m³, more preferably a specific weight of 3000 kg/m³ to 4000 kg/m³.

11. Metal product according to claim 10, comprising ferrous metal particles in an amount of 60% to 90%, preferably 70% to 85%, an organic binder in an amount of 5% to 30%, preferably 5% to 15% or 20% to 30%, and preferably, a carbon-based reducing agent in an amount of 5% to 20%, preferably 10% to 15%, wherein the percentages are by weight on the total weight of the ferrous product, said metal product being preferably in the form of a block, ingot or briquette.

12. Use of a ferrous product according to claim 10 or 11, in a process for the production of steel.

13. Use of a ferrous product according to claim 12, as raw material for feeding a melting furnace for steel production, such as preferably an electric arc furnace (EAF), an induction furnace or a fuel furnace.

14. Plant for the production of metal products containing ferrous and/or non-ferrous particles from liquid or solid processing waste containing ferrous and/or non-ferrous metal particles, the plant comprising:
- a preheating unit (108),
- a mixer (130),
- a forming press (117) comprising a plurality of compression units, each having a mold (131) and a piston (132) operatively connected to each other, a cooling device (119) operatively connected to said molds (131), and means (118) for feeding a mixture exiting from said mixer (130) into said molds (131) of the compression units,
- means (127) for feeding said processing waste into said preheating unit (108),
- means (113) for feeding dried processing waste exiting from said preheating unit (108) into said mixer (130), and
- means (114,115) for feeding an organic binder and a carbon-based reducing agent into said mixer (130).

15. Plant according to claim 14 wherein said forming press (117) is configured to perform, in each compression unit, operating cycles of loading said mixture into a respective mold (131), compressing the mixture in said mold (131) through a respective piston (132) to form a metal product, cooling said mold (131) containing said metal product through said cooling device, and ejecting said metal product from said mold (131).
